# EUROPÄISCHE PATENTSCHRIFT

(11) **EP 0 769 685 B1**
(45) Veröffentlichungstag und Bekanntmachung des Hinweises auf die Patenterteilung: **22.01.2003**
(21) Anmeldenummer: 96116317.7
(22) Anmeldetag: 11.10.1996
(51) Int. Cl.: G01F 23/296

(54) **Verfahren zur Überwachung eines vorbestimmten Füllstands einer Flüssigkeit in einem Behälter**
Method of monitoring a predetermined level of a fluid in a container
Méthode de surveillance d'un niveau prédéterminé d'un fluide dans un récipient

(30) Priorität: 17.10.1995 DE 19538680
(43) Veröffentlichungstag der Anmeldung: 23.04.1997
(73) Patentinhaber: Endress + Hauser GmbH + Co.KG., 79689 Maulburg (DE)
(72) Erfinder: Getman, Igor, Prof. Dr., 79540 Lörrach (DE); Müller, Roland, 79585 Steinen (DE); Lopatin, Sergej, Dr., 79539 Lörrach (DE)
(74) Vertreter: Schwepfinger, Karl-Heinz, Dipl.-Ing.

(56) Entgegenhaltungen:
- DE-A- 2 743 409
- DE-A- 2 938 198
- FR-A- 2 617 965
- GB-A- 2 284 053

## Beschreibung

Bei einem solchen Verfahren, welches beispielsweise aus der PCT-Veröffentlichung WO95/12804 bekannt ist, beruht die Überwachung des Füllstands auf den folgenden Erscheinungen: Wenn die Meßstelle von der Flüssigkeit bedeckt ist, werden von der Behälterwand aufgrund des vom Ultraschallwandler erzeugten Ultraschall-Sendeimpulses Ultraschallwellen in die Flüssigkeit abgestrahlt, die sich in der Flüssigkeit ausbreiten und nach Reflexion an der gegenüberliegenden Behälterwand als Echosignal zu der Stelle der Behälterwand zurückkehren, an der der Ultraschallwandler montiert ist. Die vom Echosignal erzeugten Ultraschallschwingungen der Behälterwand werden vom Ultraschallwandler in ein elektrisches Wechselspannungssignal umgewandelt, das der Auswerteschaltung zugeführt wird. Somit empfängt die Auswerteschaltung einen elektrischen Echoimpuls in einem Zeitabstand nach der Aussendung des Sendeimpulses, der der Laufzeit der Ultraschallwellen in der Flüssigkeit zur gegenüberliegenden Behälterwand und zurück entspricht. Aus dem Erscheinen des Echoimpulses in diesem Zeitabstand nach dem Sendeimpuls erkennt somit die Auswerteschaltung, daß die Meßstelle von der Flüssigkeit bedeckt ist, und sie zeigt an, daß der zu überwachende Füllstand erreicht oder überschritten ist. Wenn dagegen die Meßstelle nicht von der Flüssigkeit bedeckt ist, sondern mit der Luft über dem Flüssigkeitsspiegel in Kontakt steht, empfängt die Auswerteschaltung keinen Echoimpuls in dem gleichen Zeitabstand nach der Aussendung eines Sendeimpulses. Dies ist in erster Linie darauf zurückzuführen, daß wegen des großen Unterschieds der akustischen Impedanzen der Behälterwand und der Luft die Abstrahlung von Ultraschallwellen in die Luft sehr gering ist. Sollte dennoch ein schwaches Echo detektiert werden, so würde es wegen des großen Unterschieds der Schallgeschwindigkeiten in Flüssigkeiten und in Luft wesentlich später auftreten. Aus dem Fehlen des Echoimpulses in dem zu erwartenden Empfangszeitpunkt schließt die Auswerteschaltung, daß die Meßstelle nicht von der Flüssigkeit bedeckt ist, und sie zeigt an, daß der zu überwachende Füllstand im Behälter nicht erreicht ist.

Dieses bekannte Verfahren ist nicht fehlersicher. Aus dem Fehlen der Echoimpulse ist nämlich nicht erkennbar, ob dies wirklich dadurch bedingt ist, daß der zu überwachende Füllstand nicht erreicht ist, oder ob eine andere Ursache vorliegt. Beispielsweise werden auch beim Ausfall von Schaltungsteilen, bei Unterbrechung einer Leitung und ähnlichen Fehlern keine Echoimpulse empfangen, selbst wenn die Meßstelle von der Flüssigkeit bedeckt ist. Auch kann es vorkommen, daß die Ausbreitungsbedingungen für die Ultraschallwellen vorübergehend gestört sind, beispielsweise durch die Bildung von Luftblasen während eines Füllvorgangs. In solchen Fällen würden ebenfalls keine Echoimpulse empfangen, und die Auswerteschaltung würde anzeigen, daß der zu überwachende Füllstand im Behälter nicht erreicht ist, selbst wenn in Wirklichkeit die Meßstelle von der Flüssigkeit bedeckt ist.

Bei einem aus der GB-A-2 284 053 bekannten Flüssigkeitsdetektor, der gleichfalls Ultraschall-Sendeimpulse auf die Behälterwand überträgt und reflektierte Echoimpulse auswertet, ist die Ultraschallfrequenz so hoch, daß die Ultraschallimpulse innerhalb der Behälterwand eine Vielzahl von internen Reflexionen erfahren. Die Amplitude der mehrfach reflektierten Impulse nimmt in einem Maße ab, das von der Schallimpedanz des Mediums abhängt, das im Behälter an der Innenwandfläche auf der Höhe des Flüssigkeitsdetektors anliegt. Wenn dieses Medium Luft ist, ist der Grad des Abklingens der Amplitude der mehrfach reflektierten Impulse geringer als wenn das Medium eine Flüssigkeit ist. Durch Messung des Abklingmaßes wird festgestellt, ob hinter dem Behälterwandbereich an der Meßstelle Flüssigkeit vorhanden ist oder nicht.

Aufgabe der Erfindung ist die Schaffung eines Verfahrens zur Überwachung eines vorbestimmten Füllstands einer Flüssigkeit in einem Behälter, das eine hohe Fehlersicherheit aufweist.

Nach der Erfindung wird dies dadurch erreicht, daß
- ein Ultraschallwandler an einer auf der Höhe des zu überwachenden Füllstands liegenden Meßstelle an der Außenseite der Behälterwand montiert ist;
- der Ultraschallwandler mit einer Sendefrequenz erregt wird, die gleich der Dickenresonanzfrequenz der Behälterwand ist;
- der Ultraschallwandler einen Ultraschallsendeimpuls auf die Behälterwand überträgt und Ultraschallschwingungen, die durch an der gegenüberliegenden Behälterwand reflektierte Echoimpulse erzeugt werden, in elektrische Empfangssignale umwandelt;
- die elektrischen Empfangssignale zu einer Auswerteschaltung übertragen werden, die auf Grund des Auftretens oder des Ausbleibens von Echosignalen feststellt, ob die Meßstelle von der Flüssigkeit bedeckt ist oder nicht; und daß
- in der Auswerteschaltung auch die durch das Nachschwingen der Behälterwand nach dem Ende des Sendeimpulses erzeugten Ultraschallschwingungen ausgewertet werden, um festzustellen, ob die Meßstelle von der Flüssigkeit bedeckt ist oder nicht.

Bei dem erfindungsgemäßen Verfahren wird die Tatsache ausgewertet, daß die Dickenschwingungen der Behälterwand nicht sofort mit dem Ende des Sendeimpulses aufhören, sondern infolge des Nachschwingens der Behälterwand allmählich abklingen. Die Dauer des Nachschwingens hängt davon ab, ob die Meßstelle an der Behälterwand von der Flüssigkeit bedeckt ist oder nicht. Bei bedeckter Meßstelle werden die Schwingungen stärker bedämpft als bei unbedeckter Meßstelle, so daß sie schneller abklingen. Das Nachschwingen der Behälterwand wird vom Ultraschallwandler in ein elektrisches Wechselspannungssignal umgewandelt, das gleichfalls der Auswerteschaltung zugeführt wird. Wenn die Auswerteschaltung in einem bestimmten Zeitabstand nach dem Ende des Sendeimpulses feststellt, daß das vom Nachschwingen stammende Signal fehlt, erkennt sie daraus, daß die Meßstelle von der Flüssigkeit bedeckt ist, daß also der zu überwachende Füllstand erreicht oder überschritten ist. Wenn dagegen im gleichen Zeitabstand nach dem Ende des Sendeimpulses das vom Nachschwingen stammende Signal vorhanden ist, erkennt sie daraus, daß die Meßstelle nicht von der Flüssigkeit bedeckt ist, daß also der zu überwachende Füllstand nicht erreicht ist.

Die beiden von der Auswerteschaltung ausgewerteten Signale, nämlich das Echosignal und das Nachschwingsignal, sind gewissermaßen zueinander komplementär: wenn die Meßstelle bedeckt ist, ist das Echosignal vorhanden, aber das Nachschwingsignal fehlt; wenn die Meßstelle unbedeckt ist, ist das Nachschwingsignal vorhanden, aber das Echosignal fehlt. Es gibt also für jeden dieser beiden Zustände einen vorhandenen Signalwert, der eine positive und sichere Aussage über den Füllstand liefert. Wenn eines der beiden Signale aufgrund eines fehlerhaften Zustands des Behälters oder der Meßanordnung ausfällt, aber das andere Signal vorhanden ist, zeigt das vorhandene Signal den Füllstand noch richtig an. Wenn dagegen der Füllstand den Zustand hat, bei dem auch das andere, an sich fehlerfreie Signal fehlt, zeigt das gleichzeitige Fehlen beider Signale an, daß ein Fehlerzustand besteht. Sobald festgestellt ist, welches der beiden Signale fehlerhaft ist, kann die Messung mit dem anderen Signal allein fortgesetzt werden, wobei immer noch die gleiche Fehlersicherheit wie bei herkömmlichen Meßanordnungen besteht. Natürlich wird auch dann, wenn beide Signale infolge eines fehlerhaften Zustands des Behälters oder der Meßanordnung ausfallen, dieser Fehlerzustand durch das gleichzeitige Fehlen der beiden Signale angezeigt.

Diese vorteilhaften Eigenschaften werden mit geringem Mehraufwand erzielt, denn fast alle Bestandteile der Erregungs- und Auswerteschaltungen werden für die Gewinnung der beiden Signale gemeinsam verwendet. Es hat sich auch gezeigt, daß die Erregung der Behälterwand mit ihrer Dickenresonanzfrequenz nicht nur für die Gewinnung des Nachschwingsignals, sondern auch für die Gewinnung des Echosignals optimal ist.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnungen. In den Zeichnungen zeigen:
- Fig. 1: eine schematische Darstellung zur Erläuterung der Überwachung von vorbestimmten Füllständen einer Flüssigkeit in einem Behälter,
- Fig. 2: eine perspektivische Ansicht einer Ausführungsform des bei der Erfindung angewendeten Ultraschallsensors,
- Fig. 3: einen Längsschnitt durch den Ultraschallsensor von Fig. 2 bei Anbringung an einer ebenen Behälterwand,
- Fig. 4: einen Querschnitt durch den Ultraschallsensor von Fig. 2 bei Anbringung an einer zylindrischen Behälterwand,
- Fig. 5: eine Schnittansicht des im Ultraschallsensor von Fig. 2 bis 4 verwendeten Ultraschallwandlers,
- Fig. 6: eine Draufsicht auf eine im Ultraschallwandler von Fig. 5 verwendete Montagehülse,
- Fig. 7: eine Schnittansicht der Montagehülse von Fig. 6,
- Fig. 8: eine perspektivische Ansicht der Montagehülse von Fig. 6 und 7,
- Fig. 9: eine Schnittansicht des leeren Wandlergehäuses des Ultraschallwandlers von Fig. 5,
- Fig. 10: eine Ansicht der Außenseite der durch den Boden des Wandlergehäuses von Fig. 9 gebildeten Membran,
- Fig. 11: das Blockschaltbild einer Ausführungsform der Erregungs- und Auswerteschaltung des Ultraschallsensors und
- Fig. 12: Zeitdiagramme von Signalen zur Erläuterung der Funktionsweise der Erregungs- und Auswerteelektronik von Fig. 11.

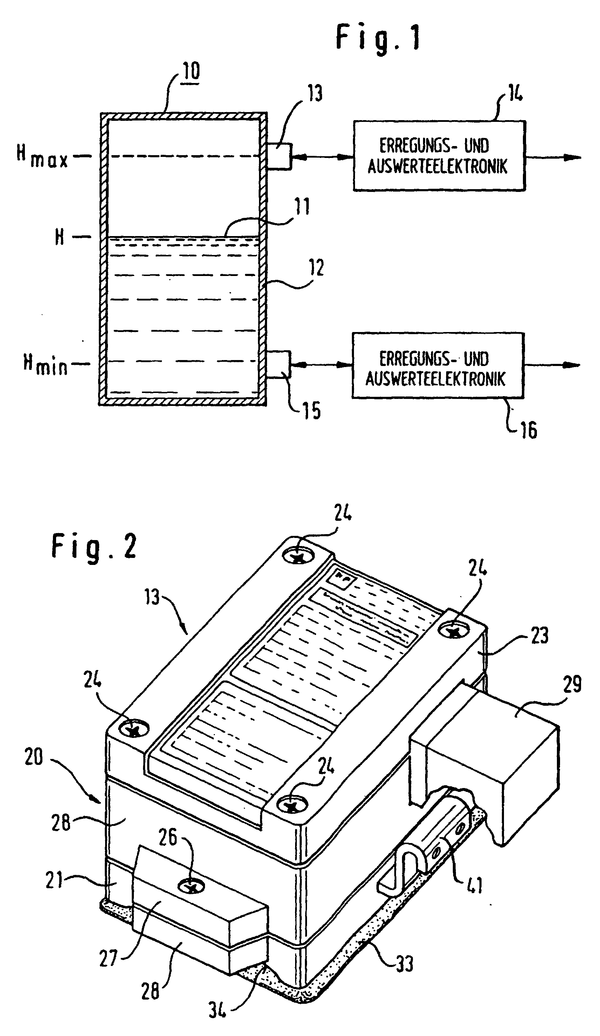

Fig. 1 zeigt einen Behälter 10, der bis zu einer Höhe H mit einer Flüssigkeit 11 gefüllt ist. Die Höhe H, in der sich die Oberfläche der Flüssigkeit 11 über dem Boden des Behälters 10 befindet, ist der momentane Füllstand im Behälter. Der Füllstand soll eine maximale Höhe Hₘₐₓ nicht überschreiten und eine minimale Höhe Hₘᵢₙ nicht unterschreiten. Jeder dieser Grenzwerte des Füllstands wird auch "Grenzstand" genannt.

Zur Überwachung des oberen Grenzstands Hₘₐₓ ist an der Außenseite der Behälterwand 12 ein Füllstandssensor 13 angebracht, der mit einer Erregungs- und Auswerteelektronik 14 verbunden ist. Zur Überwachung des unteren Grenzstands Hₘᵢₙ ist an der Außenseite der Behälterwand 12 ein Füllstandssensor 15 angebracht, der mit einer Erregungs- und Auswerteelektronik 16 verbunden ist. Jeder der beiden Sensoren 13 und 15 ist so ausgebildet, daß mit seiner Hilfe durch die Behälterwand 12 hindurch festgestellt werden kann, ob sich die Flüssigkeit 11 im Behälter 10 auf der Höhe des Sensors 13 bzw. 15 befindet oder nicht. Zu diesem Zweck ist jeder der beiden Sensoren 13 und 15 als Ultraschallsensor ausgebildet, der in der Lage ist, bei Erregung durch einen elektrischen Wechselspannungsimpuls, der von der zugehörigen Erregungs- und Auswerteschaltung 14 bzw. 16 geliefert wird, einen Ultraschallimpuls zur Behälterwand 12 hin auszusenden und empfangene Ultraschallsignale in elektrische Wechselspannungssignale umzusetzen, die zur Elektronik 14 bzw. 16 übertragen werden. Die Elektronik 14 bzw. 16 wertet die Empfangssignale aus und gibt am Ausgang ein Signal ab, das anzeigt, ob der Füllstand im Behälter 10 über oder unter dem zu überwachenden Grenzstand liegt. Zu dieser Feststellung ist es daher nicht erforderlich, die Behälterwand 12 zu durchbrechen oder den Sensor in das Innere des Behälters 10 einzubringen. Aus diesem Grund stehen die Sensoren 13 und 15 auch nicht in direktem Kontakt mit der Flüssigkeit 11.

Die beiden Sensoren 13 und 15 sowie die jeweils zugehörige Elektronik 14 bzw. 16 sind völlig gleich ausgebildet. Nachfolgend wird daher nur der Sensor 13 und die Elektronik 14 im einzelnen beschrieben. Diese Beschreibung gilt in gleicher Weise für den Sensor 15 und die Elektronik 16.

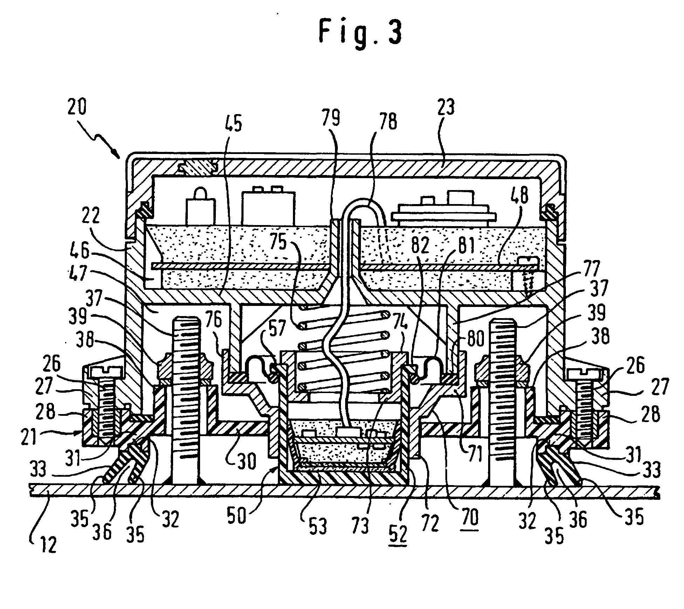

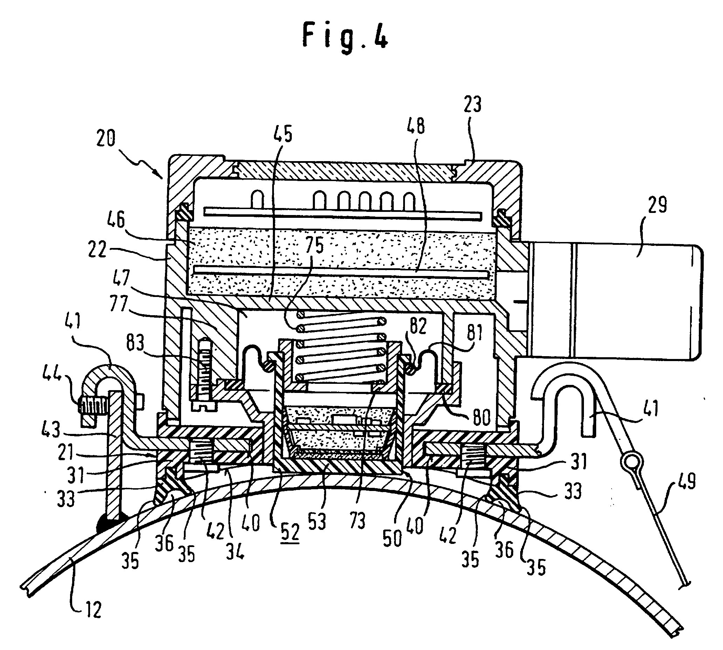

Fig. 2 zeigt eine perspektivische Ansicht des Sensors 13, und die Figuren 3 und 4 zeigen Schnittansichten des an der Behälterwand 12 befestigten Sensors 13. Fig. 3 zeigt einen Längsschnitt des Sensors 13 für den Fall, daß die Behälterwand eben ist, und Fig. 4 zeigt einen Querschnitt durch den Sensor für den Fall, daß die Behälterwand zylindrisch ist. Die Erregungs- und Auswerteelektronik 14, die in Fig. 1 zur Verdeutlichung vom Sensor 13 getrennt dargestellt ist, ist bei der in den Figuren 2 bis 4 dargestellten Ausführungsform mit dem Sensor 13 zusammengebaut.

Der in Fig. 2 gezeigte Sensor besteht aus einem Sensorblock 20, der alle Bestandteile des Ultraschallsensors und der Erregungs- und Auswerteelektronik enthält, und aus einem Adapter 21, der dazu dient, den Sensorblock 20 an Behältern unterschiedlicher Form und Größe sowie aus unterschiedlichen Materialien zu befestigen. Der Sensorblock 20 hat ein Sensorgehäuse 22, das durch einen Deckel 23 verschlossen ist, der mittels Schrauben 24 auf dem Sensorgehäuse 22 befestigt ist. Der Sensorblock 20 ist an dem Adapter 21 mittels Schrauben 26 befestigt, die durch Bohrungen in Vorsprüngen 27 an den Schmalseiten des Sensorgehäuses 22 hindurchgeführt und in Gewindebohrungen in entsprechenden Vorsprüngen 28 am Adapter 21 eingeschraubt sind. Nach Lösen der beiden Schrauben 26 kann der komplette Sensorblock von dem an der Behälterwand 12 befestigten Adapter 21 abgenommen werden. Umgekehrt wird zum Montieren eines Sensors der Adapter 21 ohne den Sensorblock 20 an der gewünschten Stelle einer Behälterwand in einer geeigneten Weise befestigt, und anschließend wird der Sensorblock 20 mit dem betriebsfertig montierten Ultraschallsensor auf den Adapter 21 aufgesetzt und mittels der Schrauben 26 befestigt. Ein seitlich vom Sensorgehäuse 22 abstehender Anschlußblock 29 ermöglicht die Verbindung der im Sensorgehäuse 22 untergebrachten Elektronik mit äußeren Anschlußleitern.

Der Adapter 21 ist ein Kunststoff-Formteil, das im wesentlichen aus einer Platte 30 besteht, deren Umriß dem Umriß des Sensorgehäuses 22 entspricht, bei dem dargestellten Beispiel also rechteckig ist. Rings um den Umfang der Platte 30 ist ein Rahmen 31 angeformt, der an der der Behälterwand zugewandten Seite mit einer Nut 32 versehen ist, in die eine Dichtung 33 eingesetzt ist. An den Längsseiten des Adapters 21, die bei einem zylindrischen Behälter 10 entlang den Mantellinien an der Behälterwand 12 anliegen, hat der Rahmen 31 eine gleichbleibende Höhe. An den Querseiten, die bei einem zylindrischen Behälter 10 entlang dem Umfang an der Behälterwand 12 anliegen, weist der Rahmen 31 eine kreisbogenförmige Ausnehmung 34 auf, wie in Fig. 2 an der vorderen Querseite zu erkennen ist. Der Krümmungsradius der Ausnehmung 34 entspricht dem Radius der Behälterwand 12 des Behälters 10 mit dem kleinsten Durchmesser, an dem der Adapter 21 anzubringen ist. Wenn der Ultraschallsensor 13 für Behälter bestimmt ist, deren Nennweite (Durchmesser) mindestens 200 mm beträgt, beträgt der Krümmungsradius der Ausnehmung 34 also 100 mm.

Die Dichtung 33 ist so ausgebildet, daß ihre zur Anlage an der Behälterwand bestimmte Dichtfläche in einer Ebene liegt, wenn der Adapter 21 noch nicht an der Behälterwand 12 angebracht ist und somit die Dichtung 33 noch nicht verformt ist. Damit diese Bedingung erfüllt ist, hat die Dichtung 33 entlang den Längsseiten des Rahmens 31 eine gleichbleibende Höhe, während ihre Höhe im Bereich jeder Querseite entsprechend der Form der Ausnehmung 34 zur Mitte hin kreisbogenförmig zunimmt. Wie aus den Figuren 3 und 4 zu ersehen ist, ist die Dichtung 33 vorzugsweise mit zwei Dichtlippen 35 ausgebildet, zwischen denen eine Einkerbung 36 besteht. Die Dichtlippen 35 sind entlang den Längsseiten des Rahmens 31 (Fig. 4) verhältnismäßig niedrig, und die Tiefe der Einkerbung 36 ist dort entsprechend gering. Entlang den Querseiten des Rahmens 31 nimmt dagegen die Höhe der Dichtlippen 35 und die Tiefe der Einkerbung 36 in gleichem Maße zu wie die Höhe der Dichtung 33. Da die Schnittebene der Schnittansicht von Fig. 3 durch die Stellen geht, an denen die Ausnehmungen 34 ihre größte Tiefe haben, haben in dieser Schnittansicht die Dichtlippen 35 ihre größte Höhe und die Einkerbungen 36 ihre größte Tiefe.

Wenn der Adapter 21 an einer ebenen Behälterwand 12 befestigt wird (Fig. 3), werden die Dichtlippen 35 im Bereich der Ausnehmungen 34 im gleichen Ausmaß zusammengedrückt wie im Bereich der geraden Längsseiten des Rahmens 31, also verhältnismäßig geringfügig. Wenn dagegen der Adapter 21 an einer zylindrischen Behälterwand 12 befestigt wird (Fig. 4), werden die Dichtlippen im Bereich der Ausnehmungen 34 stärker verformt als im Bereich der geraden Längsseiten des Rahmens 31, und zwar umso mehr, je kleiner der Krümmungsradius der Behälterwand 12 ist. Diese stärkere Verformung wird durch die größere Höhe der Dichtlippen 35 und die größere Tiefe der Einkerbung 36 in diesem Bereich ermöglicht. In allen Fällen liegen aber die Dichtlippen 35 entlang dem gesamten Umfang des Adapters 21 dichtend an der Behälterwand 12 an.

Die Schnittansicht von Fig. 3 zeigt eine erste Möglichkeit der Befestigung des Adapters 21 an der Behälterwand 12: An der Behälterwand 12 sind Gewindebolzen 37 angeschweißt, die durch die Öffnungen von Buchsen 38 ragen, die einstückig an die Platte 30 des Adapters 21 angeformt sind. Auf der aus den Buchsen 38 hervorstehenden Enden der Gewindebolzen 37 sind Muttern 39 aufgeschraubt, die die Platte 30 unter Zusammendrückung der Dichtung 33 gegen die Behälterwand 12 verspannen. Gegebenenfalls können an der Platte 30 nach unten zur Behälterwand 12 ragende Abstandshalter angeformt sein, die einen definierten Abstand der Platte 30 von der Behälterwand 12 und dadurch eine definierte Lage des Adapters 21 bezüglich der Behälterwand 12 bestimmen.

In der linken Hälfte von Fig. 4 ist eine andere Art der Befestigung des Adapters 21 an der Behälterwand 12 dargestellt. Hierzu wird in einen seitlichen Schlitz 40, der in der Mitte jeder Längsseite des Adapters 21 angebracht ist, ein Schenkel eines aus starkem Blech geformten Winkelstücks 41 eingesetzt und darin mittels einer Schraube 42 befestigt. Der andere Schenkel des Winkelstücks 40, der rechtwinklig nach oben abgebogen ist, ist am Ende hakenförmig umgebogen. Dieses hakenförmig umgebogene Ende umfaßt eine Schiene 43, die an der Behälterwand 12 angeschweißt ist, und es wird mittels wenigstens einer Schraube 44 an der Schiene 43 festgeklemmt. Diese Art der Befestigung ermöglicht es auf einfache Weise, die Stelle, an der der Sensor 13 am Behälter 10 anzubringen ist, zu bestimmen und gegebenenfalls nachträglich durch Verschieben des Adapters 21 entlang der Schiene 43 zu ändern.

Schließlich ist in der rechten Hälfte von Fig. 4 gezeigt, daß es auch möglich ist, den Adapter 21 mittels eines um den Behälter gelegten Spannbandes 49 zu befestigen. Hierzu wird in jeden der Schlitze 40 auf den beiden Seiten des Adapters 21 ein Winkelstück 41 eingesetzt und an den umgebogenen oberen Enden der nach oben abgebogenen Schenkel der beiden Winkelstücke 41 werden hakenförmige Bügel eingehakt, die an den Enden des um den Behälter gelegten Spannbandes 49 angebracht sind, wie dies in der rechten Hälfte von Fig. 4 für eines der beiden Winkelstücke dargestellt ist. Eine solche Spannbandbefestigung ergibt eine noch größere Freizügigkeit in der Wahl des Ortes der Anbringung des Sensors 13 am Behälter 10 und hat zusätzlich den Vorteil, daß kein Eingriff am Behälter selbst vorgenommen werden muß. Das Einhaken des Spannbandes 49 an den oberen Enden der nach oben abgebogenen Schenkel der Winkelstücke 41 hat zur Folge, daß die Angriffspunkte der vom Spannband 49 ausgeübten Kraft am Adapter 21 verhältnismäßig hoch liegen. Dies ist von Vorteil, weil insbesondere bei Behältern mit großem Krümmungsradius die an den Behälter anpressende Kraftkomponente mit der Höhe des Angriffspunktes deutlich zunimmt.

Die Gewindebolzen 37 oder die Schienen 43 können an der Behälterwand 12 anstatt durch Schweißen auch durch Kleben befestigt werden. Diese Art der Befestigung des Adapters 21 eignet sich dann auch für Behälter aus Kunststoff.

Das Sensorgehäuse 22 ist durch eine Querwand 45 in zwei Räume 46 und 47 unterteilt. In dem der Behälterwand 12 abgewandten äußeren Raum 46 ist die Erregungs- und Auswerteelektronik 14 untergebracht, die in üblicher Weise aus elektronischen Bauteilen besteht, die auf einer Schaltungsplatine 48 montiert sind. In dem der Behälterwand 12 und dem Adapter 21 zugewandten inneren Raum 47 sind die Bestandteile des Ultraschallsensors 13 montiert. Hierzu gehört insbesondere ein elektroakustischer Wandler 50, der dazu dient, einen von der Erregungs- und Auswerteschaltung gelieferten Wechselspannungsimpuls in einen Ultraschallimpuls umzuwandeln, der auf die Behälterwand 12 übertragen wird, und Ultraschallschwingungen, die er von der Behälterwand 12 empfängt, in eine elektrische Wechselspannung umzuwandeln, die zu der Erregungs- und Auswerteschaltung übertragen wird.

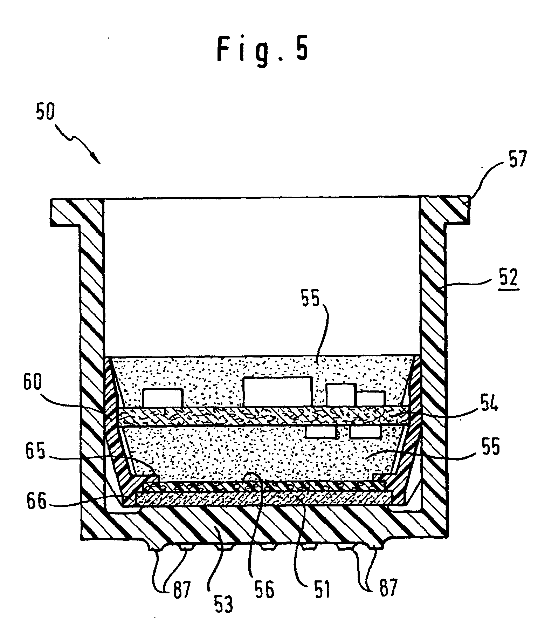

Der elektroakustische Wandler 50 ist in Fig. 5 in näheren Einzelheiten dargestellt. Er enthält als aktives Bestandteil ein piezoelektrisches Element 51, das in bekannter Weise eine Scheibe aus einem Piezokristall ist, auf deren beide Seiten Metallisierungen aufgebracht sind, die als Elektroden dienen. Wenn an die Elektroden eine Wechselspannung angelegt wird, wird der Piezokristall zu mechanischen Schwingungen mit der Frequenz der Wechselspannung angeregt, und wenn auf den Piezokristall mechanische Schwingungen übertragen werden, erzeugt er zwischen den Elektroden eine Wechselspannung mit der Frequenz der mechanischen Schwingungen. In Fig. 5 sind die Elektroden nicht dargestellt, da sie wegen der geringen Dicke der Metallisierung im Vergleich zu der Dicke des Piezokristalls nicht sichtbar sind.

Das piezoelektrische Element 51 ist im Innern eines topfförmigen Wandlergehäuses 52 angeordnet und liegt auf dem Boden 53 des Wandlergehäuses 52 auf, der zugleich die Membran des Ultraschallwandlers 50 bildet. Das Wandlergehäuse 52 besteht aus Kunststoff.

Auf der der Membran 53 abgewandten Seite des piezoelektrischen Elements 51 ist eine Schaltungsplatine 54 angeordnet, die die Bauteile einer Schaltung trägt, die zur Ankopplung des piezoelektrischen Elements 51 an die Erregungs- und Auswerteelektronik 14 dient. Die Schaltungsplatine 54 befindet sich im Abstand von dem piezoelektrischen Element 51, und der Zwischenraum zwischen der Schaltungsplatine 54 und dem piezoelektrischen Element 51 ist mit einer Vergußmasse 55 ausgefüllt, die in flüssigem Zustand eingefüllt wird und sich dann verfestigt. Die der Membran 53 abgewandte Seite des piezoelektrischen Elements 51 ist mit einer Scheibe 56 aus einem geschlossenporigen Schaumstoff bedeckt, die verhindert, daß die Vergußmasse 55 in direkten Kontakt mit dem piezoelektrischen Element 51 kommt. Auch der Raum oberhalb der Schaltungsplatine54 ist bis zu einer solchen Höhe mit der Vergußmasse 55 ausgefüllt, daß alle auf der Schaltungsplatine 54 montierten Schaltungsbestandteile in die Vergußmasse 55 eingebettet sind. Die Vergußmasse 55 ist aus Gründen des Explosionsschutzes vorgeschrieben. Sie bewirkt außerdem eine Dämpfung der Ultraschallwellen, die nach der der Membran 53 entgegengesetzten Seite abgestrahlt werden.

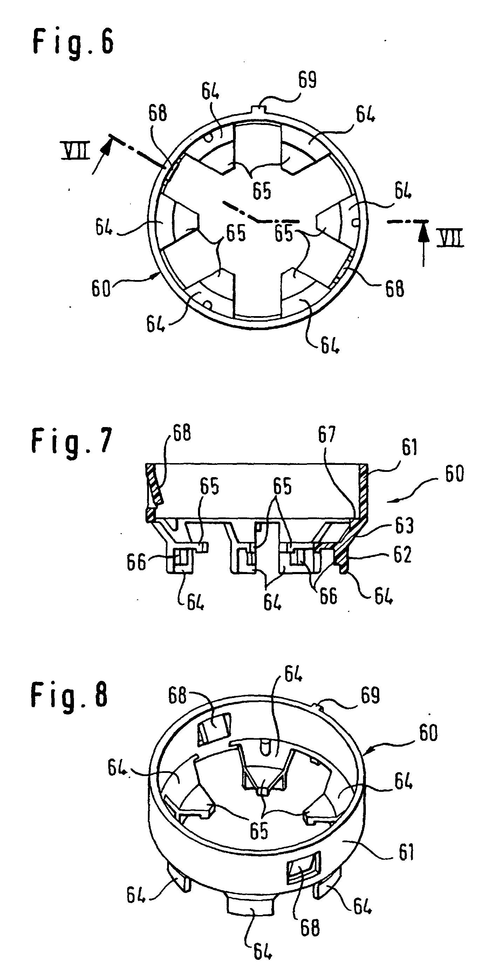

Um den Einbau des piezoelektrischen Elements 51 und der Schaltungsplatine 54 sowie das Vergießen dieser Teile zu erleichtern, ist eine Montagehülse 60 vorgesehen, die in den Figuren 6, 7 und 8 in näheren Einzelheiten dargestellt ist. Die Montagehülse 60 ist ein Formkörper aus Kunststoff, der in Fig. 6 in Draufsicht, in Fig. 7 im Längsschnitt entlang der gebrochenen Linie A-A von Fig. 6 und in Fig. 8 in perspektivischer Ansicht gezeigt ist. Die Montagehülse 60 hat einen breiteren zylindrischen Abschnitt 61, einen engeren zylindrischen Abschnitt 62 von kleinerem Durchmesser und einen konischen Abschnitt 63 zwischen den beiden zylindrischen Abschnitten 61 und 62. Der Außendurchmesser des breiteren zylindrischen Abschnitts 61 entspricht dem Innendurchmesser des topfförmigen Wandlergehäuses 52, und der Innendurchmesser des engeren zylindrischen Abschnitts 62 entspricht dem Durchmesser des piezoelektrischen Elements 51. Der engere zylindrische Abschnitt 62 und der konische Übergangsabschnitt 63 sind durch Ausschnitte in sechs Segmente 64 unterteilt. An jedem Segment 64 ist an dem Übergang zwischen dem zylindrischen Abschnitt 61 und dem konischen Abschnitt 63 eine radial nach innen ragende Tatze 65 angeformt. Unterhalb jeder Tatze 65 ist eine Anschlagnase 66 angeformt, die sich nur über einen Teil der Höhe des zylindrischen Abschnitts 62 nach unten erstreckt und nur geringfügig radial nach innen vorspringt. Am Übergang zwischen dem konischen Abschnitt 63 und dem breiteren zylindrischen Abschnitt 61 ist eine Schulter 67 gebildet. In der Wand des breiteren zylindrischen Abschnitts 61 ist an zwei einander diametral gegenüberliegenden Stellen durch Ausschnitte jeweils eine elastische Raste 68 gebildet, deren freies Ende geringfügig nach innen vorspringt und in einem Abstand von der Schulter 67 liegt, der der Dicke der Schaltungsplatine 54 entspricht. Eine am Umfang des breiteren zylindrischen Abschnitts 61 angeformte Rippe 69 greift in eine entsprechende Nut im Wandlergehäuse 52 ein, wodurch die Montagehülse 60 im Wandlergehäuse 52 gegen Verdrehung gesichert wird.

Die beschriebene Ausbildung der Montagehülse 60 erlaubt eine einfache, schnelle und präzise Montage der Bestandteile des Ultraschallwandlers 50 außerhalb des Wandlergehäuses 52. Das piezoelektrische Element 51 mit der darauf aufgelegten Scheibe 56 aus geschlossenporigem Schaumstoff wird von unten her in den engeren zylindrischen Abschnitt 62 eingeführt, bis das piezoelektrische Element 51 an den Enden der Anschlagnasen 66 anstößt. Dadurch ist die radiale und axiale Lage des piezoelektrischen Elements 51 in der Montagehülse 60 genau festgelegt. Der Durchmesser der Schaumstoffscheibe 56 ist etwas kleiner als der Durchmesser des piezoelektrischen Elements 51 und entspricht dem Abstand zwischen zwei einander diametral gegenüberliegenden Anschlagnasen 66, und die Dicke der Schaumstoffscheibe 56 entspricht der Höhe der Anschlagnasen 66. Somit liegen die Tatzen 65 auf der Oberseite der Schaumstoffscheibe 56 auf, wenn das piezoelektrische Element 51 bis zum Anschlag in die Montagehülse 60 eingeführt ist, und die Anschlagnasen 66 liegen am Umfang der Schaumstoffscheibe 56 an. Dadurch ist die radiale und axiale Lage der Schaumstoffscheibe 56 in der Montagehülse 60 genau festgelegt, und die Schaumstoffscheibe 56 wird durch die Tatzen 65 in enger Anlage an der Oberseite des piezoelektrischen Elements 51 gehalten.

Die Schaltungsplatine 54 ist kreisrund mit einem Durchmesser, der dem Innendurchmesser des breiteren zylindrischen Abschnitts 61 der Montagehülse 60 entspricht. Sie wird von oben her in den breiteren zylindrischen Abschnitt 61 eingeführt, bis sie auf der Schulter 67 aufliegt. Während des Einschiebens werden die Rasten 68 vom Umfangsrand der Schaltungsplatine 54 nach außen gedrückt, bis der Umfangsrand der Schaltungsplatine 54 an den Enden der Rasten 68 vorbeigegangen ist. Dann springen die Rasten 68 aufgrund ihrer Elastizität wieder nach innen vor, so daß sie über die Oberseite der Schaltungsplatine 54 greifen und diese auf der Schulter 67 festhalten. Dadurch ist auch die Schaltungsplatine 54 in axialer und radialer Richtung in der Montagehülse 60 festgelegt. Nun ist die Montagehülse 60 zum Einbau in das topfförmige Wandlergehäuse 52 bereit. Hierzu wird zunächst ein Tropfen eines wärmehärtbaren Klebstoffs auf den Boden 53 des Wndlergehäuses 52 aufgebracht, und anschließend wird die Montagehülse 60 in das Wandlergehäuse 52 eingeschoben, bis das piezoelektrische Element 51 den Boden 53 berührt. Dabei verteilt sich der Klebstoff in einer dünnen Schicht zwischen den einander zugewandten Flächen des piezoelektrischen Elements 51 und des Bodens 53. Dann wird der Klebstoff durch Erwärmung gehärtet, wobei die Montagehülse 60 mit einem Gewicht beschwert wird, damit eine definierte Klebstoffschicht erhalten wird. Die Klebstoffschicht gewährleistet den Kontakt zwischen dem piezoelektrischen Element 51 und der vom Boden 53 gebildeten Membran des Ultraschallwandlers 50, und sie verhindert die Bildung einer Luftschicht zwischen diesen Teilen.

Dann wird von oben Vergußmasse 55 in die Montagehülse 60 eingefüllt. Diese Vergußmasse fließt durch hierfür vorgesehene Öffnungen in der Schaltungsplatine 54 auch in den Zwischenraum zwischen der Schaltungsplatine 54 und der Schaumstoffscheibe 56. Die Schaumstoffscheibe 56 verhindert, daß die Vergußmasse 55 in Kontakt mit der Oberseite des piezoelektrischen Elements 51 kommt. Die Tatzen 65, die den Rand der Schaumstoffscheibe 56 auf die Oberseite des piezoelektrischen Elements 51 drücken, verhindern, daß Vergußmasse 55 zwischen die Schaumstoffscheibe 56 und das piezoelektrische Element 51 kriecht.

Zur Montage des topfförmigen Wandlergehäuses 52 im Sensorgehäuse 22 dient ein Halteteil 70 mit einem Flansch 71, an dem eine Führungsbuchse 72 angeformt ist. Das Wandlergehäuse 52 wird in die Führungsbuchse 72 eingeschoben, deren Innendurchmesser dem Außendurchmesser des Wandlergehäuses 52 entspricht, so daß das Wandlergehäuse 52 gleitbar in der Führungsbuchse 72 gelagert ist. Der Bund 57 am Wandlergehäuse 52 verhindert, daß das Wandlergehäuse 52 aus der Führungsbuchse 72 austritt. In das offene Ende des Wandlergehäuses 52 wird ein Federbecher 73 eingesteckt, der seinerseits einen Bund 74 aufweist, der sich am Ende des Wandlergehäuses 52 abstützt. Der Federbecher 73 nimmt das eine Ende einer Schraubendruckfeder 75 auf. Rings um den Rand des Flansches 71 verläuft ein Bund 76, dessen Innendurchmesser dem Außendurchmesser eines an der Querwand 45 angeformten Trägerrohres 77 entspricht.

Vor dem Anbringen des Halteteils 70 an dem Trägerrohr 77 wird eine Verbindungsleitung 78, die an der Schaltungsplatine 54 angelötet ist und zur Verbindung des Ultraschallwandlers 50 mit der Erregungs- und Auswerteelektronik 14 bestimmt ist, durch einen von der Querwand 45 nach der entgegengesetzten Seite abstehenden Rohrstutzen 79 durchgeführt. Auf den Flansch 71 wird ein Dichtungsring 80 aufgelegt, an dem der Außenrand einer ringförmigen Manschette 81 befestigt ist, deren Innenrand mit einem um das Wandlergehäuse 52 gelegten elastischen Ring 82 verbunden ist. Dann wird der Bund 76 über das Trägerrohr 77 geschoben, und der Flansch 71 wird mittels Schrauben 83, die in verdickte Wandabschnitte des Trägerrohres 77 eingeschraubt werden und von denen eine in Fig. 4 sichtbar ist, am Trägerrohr 77 befestigt. Die Feder 75 ist so bemessen, daß sie zwischen dem Federbecher 73 und der Querwand 45 zur Erzielung einer gewünschten Vorspannung zusammengedrückt ist, wenn das Halteteil 70 am Trägerrohr 77 befestigt ist.

Anschließend kann die Verbindungsleitung 78 an den auf der Schaltungsplatine 48 vorgesehenen Anschlußstellen angelötet werden, und der äußere Raum 46 kann nahezu bis zur Höhe des Rohrstutzens 79 mit einer Vergußmasse gefüllt werden. Der Rohrstutzen 79 verhindert, daß die Vergußmasse in den inneren Raum 47 fließt.

Damit ist der Sensorblock 20 betriebsfertig montiert, und er kann auf dem Adapter 21 befestigt werden. Hierzu wird die Führungsbuchse 72 durch eine Öffnung in der Platte 30 des Adapters 21 gesteckt, so daß der Boden des Wandlergehäuses 52, also die Membran 53 des Ultraschallwandlers 50, an die Außenseite der Behälterwand 12 angelegt wird. Wenn der Sensorblock 20 weiter zum Adapter 21 hin bewegt wird, wird das Wandlergehäuse 52 von der Behälterwand 12 festgehalten, so daß es in die Führungsbuchse 72 hineingeschoben wird, wodurch die Feder 75 weiter zusammengedrückt wird. Wenn schließlich der Sensorblock 20 mittels der Schraube 26 auf dem Adapter 21 befestigt ist, wird die Membran 53 mit einer durch die Feder 75 bestimmten Andruckkraft an die Behälterwand 12 angedrückt.

Ein Vergleich der Figuren 3 und 4 läßt erkennen, daß der Ultraschallwandler 50 bei Anbringung des Sensors 13 an einer ebenen Behälterwand 12 (Fig. 3) weiter aus der Führungsbuchse 72 herausragt als im Falle einer gekrümmten Behälterwand 12 (Fig. 4), wobei aber in jedem Fall die Anlage der Membran 53 an der Behälterwand 12 mit einer durch die Feder 75 bestimmten Andruckkraft gewährleistet ist.

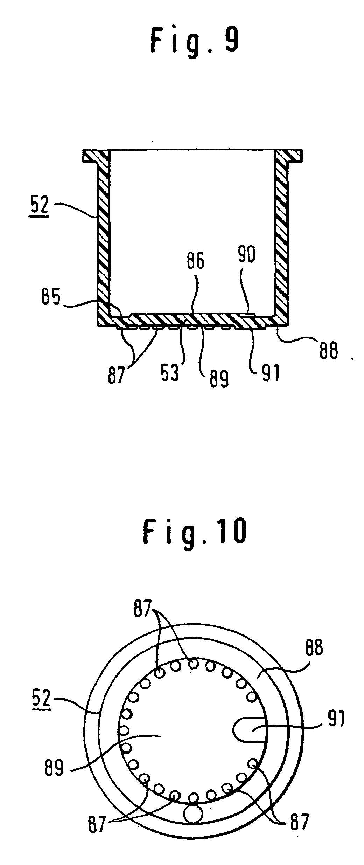

Für das einwandfreie Funktionieren des Ultraschallsensors und die Erzielung eines guten Wirkungsgrads ist es wesentlich, daß eine gute akustische Kopplung einerseits zwischen dem piezoelektrischen Element 51 und der Membran 53 und andererseits zwischen der Membran 53 und der Behälterwand 12 besteht. Insbesondere dürfen zwischen diesen Teilen keine Luftschichten vorhanden sein, da diese zu hohen Sprüngen der akustischen Impedanz auf dem Weg vom piezoelektrischen Element 51 zur Behälterwand 12 und zurück führen würden. An Hand der Figuren 9 und 10 wird die bevorzugte Ausbildung der Membran 53 erläutert, mit der diese gute akustische Kopplung erzielt werden kann.

Die Schnittansicht des Wandlergehäuses 52 in Fig. 9 läßt erkennen, daß auf der Innenseite der Membran 53 eine rings um den Umfang verlaufende Vertiefung 85 geformt ist, die den aktiven Membranbereich 86 umgibt, auf dem das piezoelektrische Element 51 aufliegt. Wie bereits zuvor erläutert wurde, wird zur Vermeidung jeglicher Luftschicht zwischen dem piezoelektrischen Element 51 und dem aktiven Membranbereich 86 vor dem Einsetzen der Montagehülse 60 in das topfförmige Wandlergehäuse 52 auf die freiliegende Fläche des piezoelektrischen Elements 51 ein Klebstoff aufgebracht, der sich dann, wenn das piezoelektrische Element 51 beim Einsetzen der Montagehülse 60 auf den aktiven Membranbereich 86 aufgedrückt wird, zwischen den einander zugewandten Flächen dieser beiden Teile verteilt. Die ringförmige Vertiefung 85 dient zur Aufnahme von überschüssigem Klebstoff, der aus dem Zwischenraum zwischen dem piezoelektrischen Element 51 und dem aktiven Membranbereich 86 verdrängt wird. Vorzugsweise wird ein wärmehärtbarer Klebstoff verwendet, weil dieser seine Eigenschaften auch bei höheren Betriebstemperaturen nicht verliert.

Auf der Außenseite der Membran 53 ist eine Reihe von Vorsprüngen 87 angeformt, die in einem Kreisring angeordnet sind, der sich ungefähr mit dem Umfang des aktiven Membranbereichs 86 deckt (Fig. 10). Die Vorsprünge 87 haben bei dem dargestellten Beispiel die Form von runden Noppen. Der außerhalb des Rings der Vorsprünge 87 liegende ringförmige Bereich 88 der Membran 53 ist gegenüber der innerhalb des Rings liegenden Membranfläche 89 etwas vertieft. In Fig. 9 ist an der Innenseite der Membran 53 eine Vertiefung 90 zu erkennen, die zur Aufnahme der Lötstelle dient, durch die ein Anschlußleiter mit der auf der Membran aufliegenden Elektrode des piezoelektrischen Elements 51 verbunden ist. Dieser Vertiefung liegt an der Außenseite der Membran 53 ein entsprechend erweiterter Vorsprung 91 gegenüber.

Bei der Montage des Sensors 13 an der Behälterwand 12, also in dem zuvor beschriebenen Beispiel bei der Montage des Sensorblocks 20 am Adapter 21, wird zwischen die Membran 53 und die Behälterwand 12 eine Kopplungsschicht aus einem Material eingebracht, das die Bildung einer Luftschicht zwischen der Membran 53 und der Behälterwand 12 verhindert und eine gute akustische Kopplung zwischen der Membran und der Behälterwand ergibt. Die Vorsprünge 87, die in direkte Berührung mit der Behälterwand 12 kommen, bestimmen die Dicke der Kopplungsschicht.

Als Material für die Kopplungsschicht eignet sich beispielsweise das im Handel unter der Bezeichnung Wacker SilGel 612 bekannte Silicon-Gel. Hierbei handelt es sich um einen 2-Komponenten-Siliconkautschuk, der sich nach dem Mischen der beiden Komponenten durch Additionsvernetzung zu einem sehr weichen, gelartigen Vulkanisat verfestigt. Dieses Material ist nach dem Mischen der beiden Komponenten zunächst sehr dünnflüssig, was ungünstig ist, da die Gefahr besteht, daß es vorzeitig abfließt, wenn es auf die Membranfläche 89 aufgebracht wird, bevor die Membran 53 auf die Behälterwand 12 aufgesetzt wird. Das Silicon-Gel wird daher vorzugsweise durch Beimischung von Glasfasern verstärkt, beispielsweise in einem Anteil von 50 Vol.-%. Die Glasfasern können einen Durchmesser von 30 µm und eine Länge von 400 µm haben. Durch die Glasfasern wird die Viskosität des Silicon-Gels erhöht, wodurch das vorzeitige Abfließen vermieden wird. Zusätzlich bewirken die Glasfasern auch eine Erhöhung der akustischen Impedanz der Kopplungsschicht, was günstig ist, da sich diese dadurch der akustischen Impedanz der Kunststoffmembran 53 annähert.

Beim Aufsetzen der Membran 53 auf eine ebene Behälterwand 12 kann überschüssiges Material der Kopplungsschicht durch die Zwischenräume zwischen den Vorsprüngen 87 verdrängt werden. Aus diesem Grund ist es nicht zweckmäßig, einen geschlossenen Ring als Abstandshalter zur Bestimmung der Dicke der Kopplungsschicht vorzusehen.

Wenn die Membran 53 auf eine zylindrische Behälterwand 12 aufgesetzt wird, entsteht ein Kontakt zwischen den Vorsprüngen 87 und der Behälterwand 12 im wesentlichen nur entlang einer Mantellinie des Behälters. Für die Funktion des Ultraschallsensors kommt es nur auf die Verhältnisse entlang dieser Berührungslinie an; auch in diesem Fall bestimmen die Vorsprünge 87 die Dicke der Kopplungsschicht entlang dieser Berührungslinie.

Für die durch die Kopplungsschicht erzielte gute Kopplung zwischen der Membran 53 und der Behälterwand 12 ist es wesentlich, daß die Membran aus Kunststoff besteht, weil die akustischen Impedanzen der Kunststoffmembran und der Kopplungsschicht in der gleichen Größenordnung liegen, so daß keine großen Impedanzsprünge entstehen. Dies ermöglicht die Verwendung einer verhältnismäßig dicken Kopplungsschicht. Je dicker die Kopplungsschicht ist, desto besser ist die thermische und mechanische Stabilität des Sensors. Nach oben ist die Dicke der Kopplungsschicht dadurch begrenzt, daß ihre Dickenresonanz oberhalb der angewendeten Ultraschallfrequenz liegen soll. Bei Verwendung des oben erwähnten glasfaserverstärkten Silicon-Gels kann die Dicke der Kopplungsschicht und damit die Höhe der Vorsprünge etwa 0,2 mm betragen.

Da die Membran 53 ein Teil des Wandlergehäuses 52 ist, muß das ganze Wandlergehäuse 52 aus einem Kunststoff bestehen, der für die Membran 53 geeignet ist. Eine wesentliche Anforderung an das Material der Membran besteht darin, daß der dynamische Glasübergang, d.h. die Temperatur, bei welcher der Kunststoff aus der kristallinen Phase in die amorphe Phase übergeht, oberhalb der höchsten vorkommenden Betriebstemperatur liegen soll. Als besonders gut geeignet hat sich Polyetheretherketon (PEEK) erwiesen.

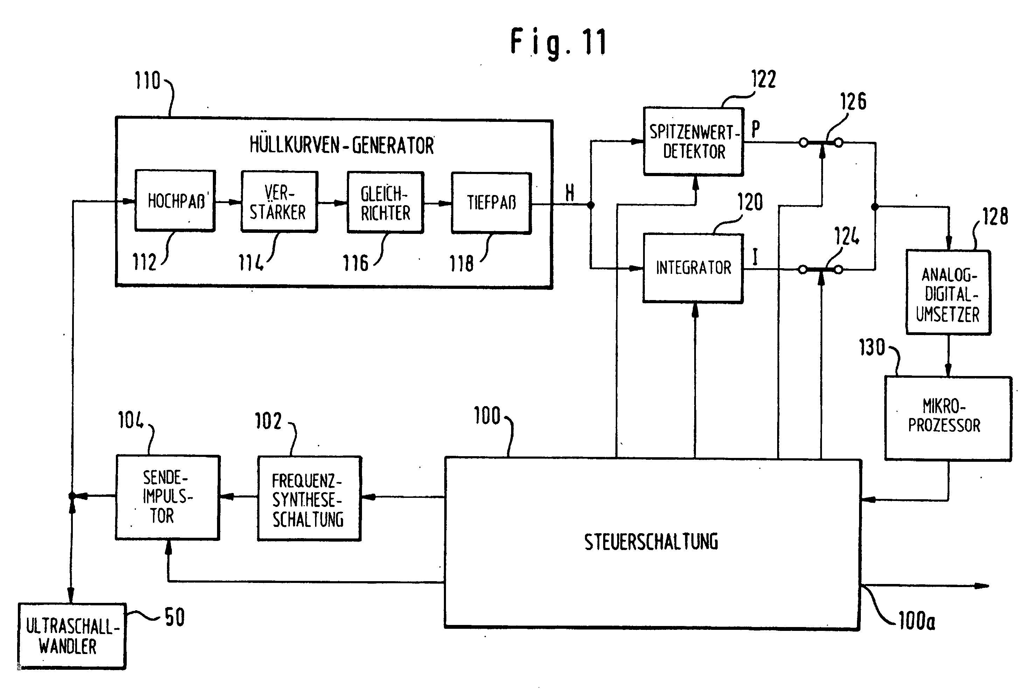

Fig. 11 zeigt ein vereinfachtes Blockschaltbild der Erregungs- und Auswerteelektronik 14. Der Ultraschallwandler 50 ist symbolisch durch einen Schaltungsblock dargestellt.

Eine Steuerschaltung 100 steuert alle Funktionen der verschiedenen Schaltungsbestandteile. Hierzu gehört eine Frequenzsyntheseschaltung 102, die eine elektrische Wechselspannung mit der Frequenz erzeugt, die das vom Ultraschallwandler 50 erzeugte Ultraschallsignal haben soll. Diese Frequenz wird durch ein Steuersignal bestimmt, das von der Steuerschaltung 100 an einen Steuereingang der Frequenzsyntheseschaltung 102 angelegt wird.

Der Ausgang der Frequenzsyntheseschaltung 102 ist mit dem Signaleingang eines Sendeimpuls-Tors 104 verbunden, das an seinem Steuereingang von der Steuerschaltung 100 jedesmal dann einen Öffnungsimpuls empfängt, wenn der Ultraschallwandler 50 einen Ultraschallimpuls erzeugen soll. Das Sendeimpuls-Tor 104 wird durch den Öffnungsimpuls geöffnet, so daß die von der Frequenzsyntheseschaltung 102 erzeugte Wechselspannung für die Dauer des Öffnungsimpulses an den Ultraschallwandler 50 angelegt wird.

Empfangsseitig ist der Anschluß des Ultraschallwandlers 50 mit dem Eingang eines Hüllkurven-Generators 110 verbunden, der in Kaskade einen Hochpaß 112, einen Verstärker 114, einen Gleichrichter 116 und einen Tiefpaß 118 enthält. Der Hochpaß 112 läßt nur Frequenzen oberhalb der unteren Arbeitsfrequenz des Ultraschallwandlers 50 durch. Der Verstärker 114 verstärkt das Ausgangssignal des Hochpasses 112 zur problemlosen Gleichrichtung. Durch den Gleichrichter 116 und den nachgeschalteten Tiefpaß 118 wird das Hüllkurvensignal des vom Ultraschallwandler 50 gelieferten Wechselspannungssignals gebildet.

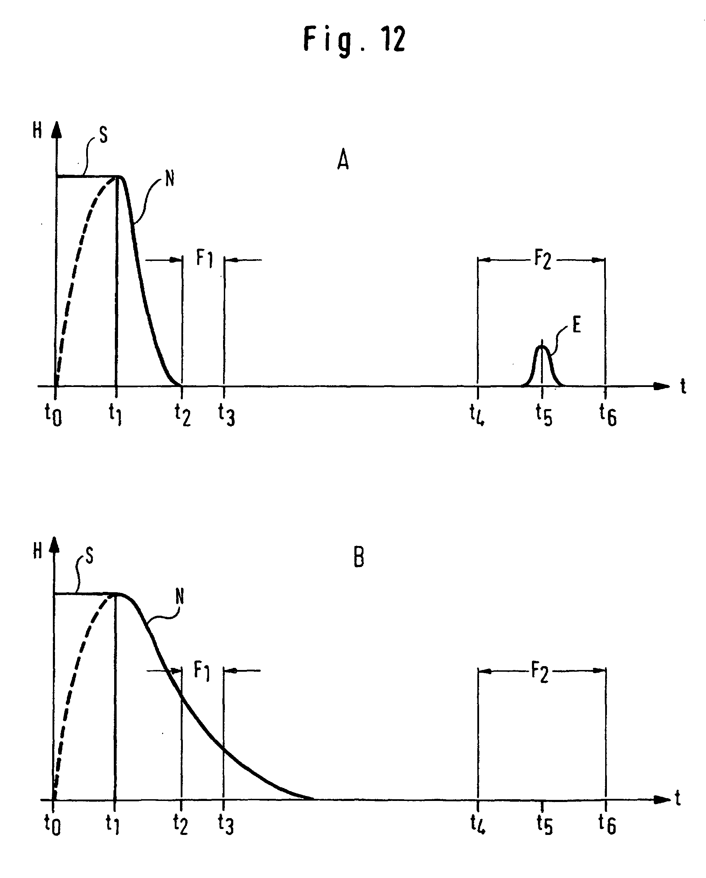

Ein wesentliches Merkmal der Erregungs- und Auswerteschaltung von Fig. 11 besteht darin, daß die von der Frequenzsyntheseschaltung erzeugte Sendefrequenz, mit der der Ultraschallwandler 50 erregt wird, genau gleich einer Dickenresonanzfrequenz der Behälterwand 12 ist, an der der Ultraschallsensor 13 montiert ist. Diese Dickenresonanzfrequenz kann die Grundfrequenz der Dickenresonanz sein oder bei dicken Behälterwänden, bei denen diese Grundfrequenz zu niedrig wäre, die zweite Ordnung der Resonanz. Die Diagramme von Fig. 12 zeigen die Hüllkurvensignale, die unter dieser Voraussetzung am Ausgang des Hüllkurven-Generators 110 erhalten werden. Das Diagramm A von Fig. 12 zeigt das Hüllkurvensignal H als Funktion der Zeit t für den Fall, daß der Füllstand im Behälter 10 über dem vom Ultraschallsensor zu überwachenden Füllstand liegt, so daß die Meßstelle, d.h. die Stelle der Behälterwand 12, an der der Ultraschallsensor montiert ist, von der Flüssigkeit 11 bedeckt ist. Dies entspricht dem Zustand des Sensors 15 in Fig. 1. Das Diagramm B von Fig. 12 zeigt das Hüllkurvensignal H als Funktion der Zeit t für den Fall, daß der Füllstand im Behälter 10 unter dem vom Ultraschallsensor zu überwachenden Füllstand liegt, so daß die Meßstelle von der Flüssigkeit 11 nicht bedeckt ist. Dies entspricht dem Zustand des Sensors 13 in Fig. 1.

Im Diagramm A ist der Sendeimpuls S dargestellt, der im Zeitpunkt t₀ beginnt und im Zeitpunkt t₁ endet. Durch den Sendeimpuls wird die Behälterwand 12 an der Stelle, auf die der Ultraschallwandler 50 Ultraschallschwingungen überträgt, zu Dickenschwingungen mit der Eigenresonanzfrequenz angeregt, die sich allmählich aufbauen, wie durch die gestrichelte Linie dargestellt ist. Der Sendeimpuls soll so lang sein, daß die Dickenschwingungen vor dem Ende des Sendeimpulses den stationären Endzustand erreichen. Die Dickenschwingungen enden nicht sofort mit dem Ende des Sendeimpulses im Zeitpunkt t₁, sondern sie klingen infolge des Nachschwingens der Behälterwand allmählich ab. Das Hüllkurvensignal H enthält somit im Anschluß an das Ende des Sendeimpulses S die Hüllkurve N des Nachschwingens der Behälterwand 12. Da jedoch die Behälterwand 12 an der schwingenden Stelle durch die Flüssigkeit, von der sie bedeckt ist, bedämpft ist, erfolgt das Abklingen verhältnismäßig schnell, so daß es in einem Zeitpunkt t₂, der verhältnismäßig kurz hinter dem Zeitpunkt t₁ liegt, im wesentlichen beendet ist und nach diesem Zeitpunkt t₂ praktisch kein vom Nachschwingen verursachtes Hüllkurvensignal mehr vorhanden ist.

Die in Dickenresonanz schwingende Behälterwand strahlt auch Ultraschallwellen in das Innere des Behälters ab. Da die schwingende Meßstelle von der Flüssigkeit bedeckt ist, breiten sich die Ultraschallwellen in der Flüssigkeit aus, so daß sie zur gegenüberliegenden Behälterwand gelangen und dort reflektiert werden. Die reflektierten Ultraschallwellen gelangen als Echosignal zu der Stelle zurück, an der der Ultraschallsensor montiert ist, und sie werden über die Behälterwand auf den Ultraschallwandler 50 übertragen, der sie in ein elektrisches Signal umwandelt, das zum Eingang des Hüllkurven-Generators 110 gelangt. Daher erscheint in dem vom Hüllkurven-Generator 110 abgegebenen Hüllkurvensignal im Zeitpunkt t₅ die Hüllkurve E des an der gegenüberliegenden Behälterwand reflektierten Echosignals. Es wurde festgestellt, daß dieses Echosignal mit dem optimalen Wert erhalten wird, wenn die Sendefrequenz der Dickenresonanzfrequenz der Behälterwand entspricht.

Das Diagramm B von Fig. 12 zeigt ebenfalls den Sendeimpuls S, der im Zeitpunkt t₀ beginnt und im Zeitpunkt t₁ endet, sowie die Hüllkurve N des Nachschwingens der Behälterwand 12. Da die schwingende Meßstelle der Behälterwand 12 nicht von der Flüssigkeit bedeckt ist, wird sie weniger stark bedämpft als im Fall des Diagramms A, so daß die Dickenresonanzschwingungen der Behälterwand langsamer abklingen. Die Hüllkurve N des Nachschwingens hat daher im Zeitpunkt t₂, in dem sie bei bedeckter Meßstelle praktisch verschwunden ist, noch eine beträchtliche Höhe.

Dagegen ist im Hüllkurvensignal H des Diagramms B im Zeitpunkt t₅ kein Echosignal E vorhanden. Dies ist in erster Linie darauf zurückzuführen, daß wegen des großen Unterschieds der akustischen Impedanzen der Behälterwand und der Luft die Abstrahlung von Ultraschallwellen in die Luft sehr gering ist. Sollte dennoch ein schwaches Echo detektiert werden, so würde es wegen des großen Unterschieds der Schallgeschwindigkeiten in Flüssigkeiten und in Luft wesentlich später als im Zeitpunkt t₅ auftreten.

Die anhand der Diagramme A und B erläuterten Erscheinungen werden in der Erregungs- und Auswerteschaltung von Fig. 11 ausgewertet, um festzustellen, ob die Meßstelle der Behälterwand 12 von der Flüssigkeit bedeckt ist oder nicht.

Zu diesem Zweck wird das vom Hüllkurven-Generator 110 gelieferte Hüllkurvensignal H parallel einem Integrator 120 und einem Spitzenwertdetektor 122 zugeführt. Der Integrator 120 wird durch ein von der Steuerschaltung 100 geliefertes Steuersignal so gesteuert, daß er nach jeder Aussendung eines Sendeimpulses S das Hüllkurvensignal H in einem Zeitfenster F₁ zwischen den Zeitpunkten t₂ und t₃ integriert. Der Spitzenwertdetektor 122 wird durch ein von der Steuerschaltung 100 geliefertes Steuersignal so gesteuert, daß er in einem Zeitfenster F₂ zwischen den Zeitpunkten t₄ und t₆, das den Zeitpunkt t₅ des Echosignals E enthält, den Spitzenwert des Hüllkurvensignals H ermittelt.

Die Integration des Hüllkurvensignals H in dem Zeitfenster F₁ erhöht die Sicherheit bei der Bestimmung, ob ein Nachschwingen nach dem Zeitpunkt t₂ vorhanden ist oder nicht, gegenüber einer einfachen Abtastung des Hüllkurvensignals H in einem Zeitpunkt, der hinter dem Zeitpunkt t₂ liegt. Ein Vergleich der Diagramme A und B von Fig. 12 läßt erkennen, daß das Integral des Hüllkurvensignals H im Zeitfenster F₁ im Fall des Diagramms B ganz erheblich größer als im Fall des Diagramms A ist, selbst wenn im letzten Fall sporadische Störungen im Zeitfenster F₁ auftreten sollten. Der Integrator 120 gibt am Ausgang ein Analogsignal I ab, das den Wert des Integrals angibt.

Das Zeitfenster F₂ ist erforderlich, weil der Zeitpunkt t₅ des Echosignals E wegen unterschiedlicher Schallgeschwindigkeiten in der Flüssigkeit variieren kann. Änderungen der Schallgeschwindigkeit können bei der gleichen Flüssigkeit infolge von Temperaturänderungen auftreten. Ferner können unterschiedliche Schallgeschwindigkeiten vorliegen, wenn andere Flüssigkeiten in den Behälter eingefüllt werden. Das Zeitfenster F₂ wird so gewählt, daß unter allen vorkommenden Bedingungen das Echosignal in diesem Zeitfenster liegt. Der Spitzenwertdetektor 122 gibt am Ausgang ein Analogsignal P ab, das den im Zeitfenster F₂ ermittelten Spitzenwert (Peak) des Hüllkurvensignals H angibt.

Der Ausgang des Integrators 120 ist über einen Schalter 124 mit dem Eingang eines Analog-Digital-Umsetzers 128 verbunden. Der Ausgang des Spitzenwertdetektors 122 ist über einen Schalter 126 ebenfalls mit dem Eingang des Analog-Digital-Umsetzers 128 verbunden. Die beiden Schalter 124 und 126 können durch Steuersignale, die von der Steuerschaltung 100 geliefert werden, geöffnet und geschlossen werden. Der Ausgang des Digital-Umsetzers 128 ist mit einem Mikroprozessor 130 verbunden.

Im Mikroprozessor 130 werden die digitalisierten Ausgangssignale des Integrators 120 und des Spitzenwertdetektors 122 nach folgenden Kriterien ausgewertet:
- Signal I ist größer als ein zugeordneter Schwellenwert: Meßstelle unbedeckt;
- Signal I ist kleiner als der zugeordnete Schwellenwert: Meßstelle bedeckt;
- Signal P ist größer als ein zugeordneter Schwellenwert: Meßstelle bedeckt;
- Signal P ist kleiner als der zugeordnete Schwellenwert: Meßstelle unbedeckt.

Es gibt also für jeden der beiden Zustände "unbedeckt" und "bedeckt" einen positiven Signalwert ("Signal vorhanden") und einen negativen Signalwert ("Signal fehlt"):
- im Zustand "unbedeckt" ist das Signal I vorhanden, während das Signal P fehlt;
- im Zustand "besetzt" ist das Signal P vorhanden, während das Signal I fehlt.

Die Füllstandsüberwachung erfolgt daher mit einer großen Fehlersicherheit. Solange jeweils nur eines der beiden Signale I und P den zugeordneten Schwellenwert übersteigt, steht fest, daß der überwachte Füllstand richtig bestimmt ist. Wenn keines der beiden Signale I und P den zugeordneten Schwellenwert übersteigt, oder wenn beide Signale I und P gleichzeitig den zugeordneten Schwellenwert übersteigen, ist erkennbar, daß ein Fehler vorliegt.

Der Mikroprozessor 130 liefert das Ergebnis der Signalauswertung zu der Steuerschaltung 100, die dementsprechend an einem Ausgang 100a ein Signal abgibt, das anzeigt, ob der Füllstand im Behälter über oder unter der zu überwachenden Höhe liegt, oder ob ein Fehlerzustand besteht.

Wie zuvor angegeben wurde, muß die von der Frequenzsyntheseschaltung 102 erzeugte Sendefrequenz möglichst genau einer Dickenresonanzfrequenz der Behälterwand 12 entsprechen. Diese Dickenresonanzfrequenz hängt vom Material und von der Dicke der Behälterwand ab. Bei Behältern aus Metall oder Glas mit einer Wanddicke zwischen 2 mm und 15 mm liegt die ausgewertete Dickenresonanzfrequenz zwischen etwa 0,6 MHz und 2 MHz, bei Kunststoffbehältern mit gleicher Wanddicke zwischen 0,3 MHz und 0,6 MHz. Ferner ist die Dickenresonanzfrequenz bei bedeckter Meßstelle von der Dickenresonanzfrequenz bei unbedeckter Meßstelle etwas verschieden. Schließlich ändert sich die Dickenresonanzfrequenz im Betrieb insbesondere in Abhängigkeit von der Temperatur.

Aus diesen Gründen wird vor der Inbetriebnahme der Meßanordnung die Dickenresonanzfrequenz der Behälterwand bei bedeckter und bei unbedeckter Meßstelle ermittelt und in der Steuerschaltung 100 abgespeichert. Diese Resonanzfrequenzen entsprechen dem maximalen Spitzenwertsignal P im bedeckten Zustand bzw. dem maximalen Integralsignal I im unbedeckten Zustand. Ferner werden im Betrieb in gewissen Zeitabständen die Dickenresonanzfrequenzen in einem bestimmten Bereich um die bei der Inbetriebnahme gefundenen Frequenzen korrigiert. Kriterium für die Korrektur der für die Integralmessung genutzten Frequenz ist ein maximales Integralsignal I, Kriterium für die Korrektur der für die Spitzenwertmessung genutzten Frequenz ist ein maximales Spitzenwertsignal P. Wenn die auf diese Weise ermittelten Frequenzwerte um mehr als eine bestimmte Toleranzschwelle von den gespeicherten Frequenzwerten abweichen, werden die gespeicherten Frequenzwerte entsprechend korrigiert.

Zur Berücksichtigung der unterschiedlichen Dickenresonanzfrequenzen bei bedeckter und bei unbedeckter Meßstelle wird vorzugsweise die Messung in aufeinanderfolgenden Sendeperioden abwechselnd mit der einen und mit der anderen gespeicherten Dickenresonanzfrequenz durchgeführt.

In einer Sendeperiode veranlaßt die Steuerschaltung 100 die Erregung des Ultraschallwandlers 50 mit der Sendefrequenz, die der Resonanzfrequenz mit maximalem Integralsignal I entspricht. Zugleich öffnet die Steuerschaltung 100 den Schalter 126, so daß das Ausgangssignal P des Spitzenwertdetektors 122 in dieser Sendeperiode nicht verwertet wird. Falls die Meßstelle tatsächlich nicht bedeckt ist, würde der Spitzenwertdetektor 122 in dieser Sendeperiode ohnehin kein nutzbares Ausgangssignal liefern. Wenn dagegen die Meßstelle bedeckt ist, wäre das Ausgangssignal des Spitzenwertdetektors 122 nicht optimal. Dagegen hat die Sendefrequenz den Wert, bei dem der Integrator 120 das optimale Ausgangssignal liefert, wenn die Meßstelle tatsächlich nicht bedeckt ist.

In der nächsten Sendeperiode veranlaßt die Steuerschaltung 100 die Erregung des Ultraschallwandlers 50 mit der Sendefrequenz, die der Resonanzfrequenz mit maximalem Spitzenwertsignal P entspricht, und sie öffnet den Schalter 124, während der Schalter 126 geschlossen wird. Somit wird in dieser Sendeperiode das Ausgangssignal I des Integrators 120 nicht verwertet. Falls die Meßstelle tatsächlich bedeckt ist, würde der Integrator 120 in dieser Sendeperiode ohnehin kein nutzbares Ausgangsssignal liefern. Wenn dagegen die Meßstelle nicht bedeckt ist, wäre das Ausgangssignal des Integrators 120 nicht optimal, weil es nicht bei der richtigen Dickenresonanzfrequenz aufgenommen würde. Dagegen hat die Sendefrequenz in dieser Sendeperiode den Wert, bei dem der Spitzenwertdetektor 122 das optimale Ausgangssignal liefert, wenn die Meßstelle tatsächlich bedeckt ist.

Diese beiden Sendeperioden werden abwechselnd wiederholt. Dadurch wird erreicht, daß der Mikroprozessor 130 vom Integrator 120 im unbedeckten Zustand und vom Spitzenwertdetektor 122 im bedeckten Zustand jeweils nutzbare (d.h. den zugeordneten Schwellenwert übersteigende) Ausgangssignale empfängt, die bei der richtigen Dickenresonanzfrequenz erhalten worden sind.

Auch bei diesem Betrieb mit abwechselnden Sendefrequenzen bleibt die zuvor erläuterte Fehlersicherheit bestehen: ein Fehler liegt vor, wenn in den aufeinanderfolgenden Sendeperioden die beiden Signale I und P ihre zugeordneten Schwellenwerte nicht übersteigen oder die beiden Signale I und P die zugeordneten Schwellenwerte übersteigen.

Wenn aufgrund eines angezeigten Fehlerzustands festgestellt wird, daß entweder die Gewinnung des Nachschwingsignals durch den Integrator 120 oder die Gewinnung des Echosignals durch den Spitzenwertdetektor 122 ausgefallen oder fehlerhaft ist, kann die Überwachung des Füllstands jeweils mit Hilfe des anderen Signals fortgesetzt werden, indem der dem fehlerhaften Signal zugeordnete Schalter 124 bzw. 126 dauernd geöffnet bleibt. Zwar entfällt dann die zuvor erläuterte erhöhte Fehlersicherheit, doch arbeitet die Meßanordnung immer noch mit der gleichen Fehlersicherheit wie bekannte Meßanordnungen. In gleicher Weise kann verfahren werden, wenn die Erfassung eines der beiden Signale bei einem bestimmten Füllgut nicht möglich ist. Die Meßanordnung ist daher ohne konstruktive Änderungen sehr vielseitig verwendbar.

Da bei der zuvor beschriebenen Anordnung der piezoelektrische Wandler 50 mit einer Dickenresonanzfrequenz der Behälterwand 12 erregt wird, muß das piezoelektrische Element 51 so beschaffen sein, daß es bei der jeweils angewendeten Dickenresonanzfrequenz befriedigend arbeitet. Scheibenförmige piezoelektrische Elemente zeigen zwei Schwingungsmoden, nämlich Dickenschwingungen und Radialschwingungen mit unterschiedlichen Resonanzfrequenzen. Die Radialschwingungen sind jedoch für die beschriebene Anwendung nicht geeignet, weil sie über die Kunststoffmembran 53 und die weiche Kopplungsschicht praktisch nicht übertragbar sind, so daß die Energie der Radialschwingungen als Verlust anzusehen ist. Bei herkömmlichen piezoelektrischen Elementen aus massiver Keramik, beispielsweise aus Blei-Zirkonat-Titanat (PZT), sind die Radialschwingungen sehr ausgeprägt und nur schwer von den Dickenschwingungen zu trennen. Die Radialschwingungen treten daher insbesondere im Nachschwingbereich störend in Erscheinung. Vor allem aber sind die nutzbaren Frequenzbereiche herkömmlicher piezoelektrischer Elemente sehr schmalbandig. Bei der zuvor beschriebenen Anordnung müssen jedoch die piezoelektrischen Wandler, je nach der Wanddicke und dem Material des Behälters, bei Frequenzen betrieben werden, die im Bereich von 0,3 MHz bis 2 MHz liegen. Bei Verwendung herkömmlicher piezoelektrischer Elemente würde dies bedeuten, daß praktisch für jeden Behälter ein genau angepaßtes piezoelektrisches Element vorhanden sein müßte. Es ist offensichtlich, daß dies sowohl aus Gründen der Fertigung und der Lagerhaltung als auch im Hinblick auf eine rationelle Montage der Füllstandsüberwachungsanordnung sehr ungünstig wäre.

Zur Vermeidung dieser Schwierigkeiten wird daher ein piezoelektrisches Element 51 verwendet, das aus einer porösen piezoelektrischen Keramik mit der Konnektivität 3-3 besteht.

Der Begriff der "Konnektivität" (englisch "connectivity") wurde von R. E. Newnham zur Kennzeichnung der Strukturen von mehrphasigen Feststoffen eingeführt und auch auf elektrokeramische Verbundwerkstoffe angewendet (R. E. Newnham "Composite Electroceramics", Ferroelectrics 1986, Vol. 68, S. 1-32). Die Konnektivität bezeichnet die Raumrichtungen in einem dreidimensionalen rechtwinkligen Koordinatensystem, in denen die Bestandteile jeder Phase miteinander durchgehend verbunden sind. Die Ziffer 0 bedeutet, daß die Bestandteile einer Phase in keiner Raumrichtung miteinander durchgehend verbunden sind, die Ziffer 1 bedeutet, daß die Bestandteile einer Phase in nur einer Raumrichtung miteinander durchgehend verbunden sind, usw. Die "Konnektivität 3-3" bedeutet, daß bei einem zweiphasigen Feststoff die Bestandteile jeder der beiden Phasen in allen drei Raumrichtungen miteinander durchgehend verbunden sind.

In dem Aufsatz "Dielectric, elastic and piezoelectric properties of porous PZT ceramics" von W. Wersing, K. Lubitz und J. Mohaupt in Ferroelectrics 1986, Vol. 68, S. 77-97, wird der Begriff der Konnektivität auch auf poröse Keramikwerkstoffe angewendet, die als zweiphasige Feststoffe angesehen werden, bei denen die eine Phase vom Keramikwerkstoff und die andere Phase von den Poren gebildet ist. Bei einer porösen Keramik mit der Konnektivität 3-3 sind also sowohl der Keramikwerkstoff als auch die Poren in allen drei Raumrichtungen miteinander durchgehend verbunden.

Die Verwendung eines porösen piezoelektrischen Elements 51 mit der Konnektivität 3-3 behebt weitgehend alle zuvor geschilderten Probleme. Zunächst sind die radialen Schwingungsmoden stärker gedämpft als bei herkömmlichen piezoelektrischen Elementen; das piezoelektrische Element verhält sich fast wie ein reiner Dickenschwinger. Ferner liegt die akustische Impedanz näher bei derjenigen der Kunststoffmembran 53 und der Kopplungsschicht, die zwischen die Kunststoffmembran 53 und die Behälterwand 12 eingebracht ist, wodurch eine bessere Anpassung erzielt wird. Vor allem aber ist das piezoelektrische Element wesentlich breitbandiger als ein herkömmliches piezoelektrisches Element; dadurch ist es möglich, den gesamten Frequenzbereich von 0,3 MHz bis 2 MHz mit drei bis vier piezoelektrischen Elementen abzudecken.

Die Porosität des piezoelektrischen Elements 51 erfordert jedoch einige besondere Maßnahmen, insbesondere im Hinblick auf die Vergußmasse 55, mit der der Raum auf der der Membran 53 abgewandten Seite des piezoelektrischen Elements 51 ausgefüllt wird. Der Verguß dient bei herkömmlichen piezoelektrischen Elementen einerseits zur Vermeidung von Hohlräumen und zum Einschluß der elektrischen und elektronischen Bauteile aus Gründen des Explosionsschutzes, und andrerseits zur akustischen Dämpfung auf der der Membran 53 abgewandten Seite des piezoelektrischen Elements. Bei den erfindungsgemäß verwendeten piezoelektrischen Elementen aus poröser Keramik wäre ein Verguß aus akustischen Gründen nicht erforderlich; es bleibt jedoch die Forderung bestehen, einen Verguß aus aus Gründen des Explosionsschutzes vorzusehen. Diese Forderung bedingt eine Vergußmasse, die beim Einfüllen leicht fließt, damit auch kleine Hohlräume und Spalte ausgefüllt werden; es wird vorzugsweise eine dünnflüssige Silikonvergußmasse vom Typ Sylgard 170 verwendet. Dem steht die Forderung entgegen, daß die Vergußmasse nicht in die Poren des piezoelektrischen Elements eindringt und dessen Eigenschaften nachteilig verändert. Ferner ist eine akustische Isolation der Vergußmasse vom piezoelektrischen Element erforderlich, um unerwünschte Resonanzen und ein verlängertes Nachschwingen zu unterbinden. Dies Forderung bedingt eine räumliche Trennung von Vergußmasse und piezoelektrischem Element, wobei jedoch wieder darauf zu achten ist, daß keine Hohlräume entstehen, in denen sich explosives Gas ansammeln kann.

Diese einander teilweise widersprechenden Forderungen werden bei dem zuvor beschriebenen Ausführungsbeispiel durch die folgenden Maßnahmen erfüllt:
- die Einfügung der Scheibe 56 aus geschlossenporigem Schaumstoff zwischen das piezoelektrische Element 51 und die Vergußmasse 55;
- die Vormontage des piezoelektrischen Elements 51 und der Schaumstoffscheibe 56 in der Montagehülse 60 außerhalb des Wandlergehäuses 52.

Die Scheibe 56 zur Trennung des piezoelektrischen Elements 51 von der Vergußmasse 55 besteht vorzugsweise aus einem geschlossenporigen Silikonschaumstoff; dieser ist temperaturbeständig und verhindert ein Durchdringen der Vergußmasse während der Aushärtphase. Infolge der Vormontage in der Montagehülse 60 ist sichergestellt, daß die Schaumstoffscheibe 56 auch nach dem Einsetzen der Montagehülse 60 in das Wandlergehäuse 52 durch die Tatzen 65 in dichter Anlage an dem piezoelektrischen Element 51 gehalten wird, so daß ein Unterkriechen von Vergußmasse zwischen Schaumstoffscheibe und piezoelektrischem Element verhindert wird.

Der geschlossenporige Silikonschaumstoff überträgt wegen der großen Impedanzsprünge einerseits zwischen dem piezoelektrischen Element 51 und der Schaumstoffscheibe 56 und andrerseits zwischen der Schaumstoffscheibe 56 und der Vergußmasse 55 keinen Ultraschall, wodurch die geforderte akustische Isolation erzielt wird. Ferner paßt sich der nachgiebige Silikonschaumstoff auch dem Lötpunkt an der angrenzenden Elektrode des piezoelektrischen Elements 51 an, und er umschließt die Anschlußleiter.

## Patentansprüche

1. Verfahren zur Überwachung eines vorbestimmten Füllstands einer Flüssigkeit (11) in einem Behälter (10), wobei
- ein Ultraschallwandler (50) an einer auf der Höhe des zu überwachenden Füllstands liegenden Meßstelle an der Außenseite der Behälterwand (12) montiert wird;
- der Ultraschallwandler (50) mit einer Sendefrequenz erregt wird, die gleich der Dickenresonanzfrequenz der Behälterwand (12) ist;
- der Ultraschallwandler (50) einen Ultraschallsendeimpuls auf die Behälterwand (12) überträgt und Ultraschallschwingungen, die durch an der gegenüberliegenden Behälterwand (12) reflektierte Echoimpulse erzeugt werden, in elektrische Empfangssignale umwandelt;
- die elektrischen Empfangssignale zu einer Auswerteschaltung (14, 16) übertragen werden, die auf Grund des Auftretens oder des Ausbleibens von Echosignalen feststellt, ob die Meßstelle von der Flüssigkeit (11) bedeckt ist oder nicht; und wobei
- in der Auswerteschaltung (14, 16) auch die durch das Nachschwingen der Behälterwand (12) nach dem Ende des Sendeimpulses erzeugten Ultraschallschwingungen ausgewertet werden, um festzustellen, ob die Meßstelle von der Flüssigkeit bedeckt ist oder nicht.

2. Verfahren nach Anspruch 1, **dadurch gekennzeichnet, daß** in der Auswerteschaltung (14, 16) ein Hüllkurvensignal (H) gebildet wird, das der Hüllkurve der vom Ultraschallwandler abgegebenen elektrischen Empfangssignale entspricht, daß in einem ersten Zeitfenster (F₁), das im Bereich der Nachschwingungen der Behälterwand (12) an einer Stelle liegt, an der die Nachschwingungen bei bedeckter Meßstelle im wesentlichen abgeklungen sind und bei unbedeckter Meßstelle noch nicht abgeklungen sind, das Hüllkurvensignal (H) erfaßt und mit einem zugeordneten ersten Schwellenwert verglichen wird, und daß in einem zweiten Zeitfenster (F₂), in dem ein reflektierter Echoimpuls zu erwarten ist, der Spitzenwert der Hüllkurve ermittelt und mit einem zugeordneten zweiten Schwellenwert verglichen wird.

3. Verfahren nach Anspruch 2, **dadurch gekennzeichnet, daß** das Hüllkurvensignal (H) im ersten Zeitfenster (F₁) integriert wird und daß der Wert des Integrals mit dem zugeordneten Schwellenwert verglichen wird.

4. Verfahren nach einem der Ansprüche 1 bis 3, **dadurch gekennzeichnet, daß** der Ultraschallwandler (50) abwechselnd mit zwei verschiedenen Sendefrequenzen erregt wird, von denen die erste Sendefrequenz gleich der Dickenresonanzfrequenz der Behälterwand (12) bei unbedeckter Meßstelle und die zweite Sendefrequenz gleich der Dickenresonanzfrequenz der Behälterwand (12) bei bedeckter Meßstelle ist.

5. Verfahren nach Anspruch 4, **dadurch gekennzeichnet, daß** bei Erregung des Ultraschallwandlers (50) mit der ersten Sendefrequenz nur die vom Nachschwingen stammenden Empfangssignale und bei Erregung des Ultraschallwandlers (50) mit der zweiten Senderfrequenz nur die von Echoimpulsen stammenden Empfangssignale ausgewertet werden.

6. Verfahren nach Anspruch 4 oder 5, **dadurch gekennzeichnet, daß** die Dickenresonanzfrequenzen der Behälterwand (12) bei unbedeckter und bei bedeckter Meßstelle ermittelt und in der Auswerteschaltung (14, 16) gespeichert werden.

7. Verfahren nach Anspruch 6, **dadurch gekennzeichnet, daß** im Betrieb in gewissen Zeitabständen die dem Maximum des Spitzenwerts entsprechende Sendefrequenz bzw. die dem Maximum des Integrals entsprechende Sendefrequenz in einem bestimmten Bereich um die entsprechende gespeicherte Dickenresonanzfrequenz ermittelt wird und daß bei Feststellung einer Abweichung der gespeicherte Frequenzwert korrigiert wird.

8. Verfahren nach einem der vorhergehenden Ansprüche, **dadurch gekennzeichnet, daß** der Ultraschallwandler (50) ein piezoelektrisches Element (51) enthält, das aus einer porösen piezoelektrischen Keramik mit der Konnektivität 3-3 hergestellt wird.

9. Verfahren nach Anspruch 8, **dadurch gekennzeichnet, daß** die poröse piezoelektrische Keramik Blei-Zirkonat-Titanat (PZT) ist.

10. Verfahren nach Anspruch 8 oder 9, **dadurch gekennzeichnet, daß** das piezoelektrische Element so angeordnet wird, daß es auf dem als Membran dienenden Boden (53) eines topfförmigen Wandlergehäuses (52) aus Kunststoff aufliegt, daß der Innenraum des Wandlergehäuses wenigstens teilweise mit einer Vergußmasse (55) gefüllt wird, und daß zwischen die der Membran abgewandte Fläche des piezoelektrischen Elements (51) und die Vergußmasse (55) eine Scheibe (56) aus einem geschlossenporigen Silikon-Schaumstoff eingefügt wird, die verhindert, daß die Vergußmasse (55) mit dem piezoelektrischen Element (51) in Kontakt kommt.

11. Verfahren nach Anspruch 10, **dadurch gekennzeichnet, daß** das piezoelektrische Element (51) zusammen mit der Schaumstoffscheibe (56) außerhalb des Wandlergehäuses (52) in eine Montagehülse (60) eingebaut wird, die so ausgebildet ist, daß sie nach dem Einsetzen in das Wandlergehäuse (52) und vor dem Einfüllen der Vergußmasse (55) die Schaumstoffscheibe (56) in dichter Anlage an der der Membran abgewandten Fläche des piezoelektrischen Elements (51) hält.

12. Verfahren nach Anspruch 10 oder 11, **dadurch gekennzeichnet, daß** zwischen die einander zugewandten Flächen der Membran und des piezoelektrischen Elements (51) ein wärmehärtbarer Klebstoff eingebracht wird, der nach dem Einsetzen der Montagehülse (60) in das Wandlergehäuse (52) durch Erwärmen ausgehärtet wird.

## Claims

1. A method of monitoring a predetermined level of a liquid (11) in a container (10), wherein
- an ultrasonic transducer (50) is fitted to the outer surface of the container wall (12) at a measuring point situated at the height of the level to be monitored;
- the ultrasonic transducer (50) is excited by a transmission frequency which equals the thickness resonant frequency of the container wall (12);
- the ultrasonic transducer (50) transfers an ultrasonic transmission pulse to the container wall (12) and converts into electrical reception signals ultrasonic vibrations which are generated by echo pulses reflected at the opposite container wall (12);
- the electrical reception signals are transferred to an evaluation circuit (14, 16) which, based on whether echo signals appear or not, determines whether the measuring point is covered by the liquid (11) or not; and wherein
- in the evaluation circuit (14, 16) also the ultrasonic vibrations generated by the post-pulse vibration of the container wall (12) after the end of the transmission pulse are evaluated in order to determine whether the measuring point is covered by the liquid or not.

2. The method as set forth in claim 1, **characterized in that** in the evaluation circuit (14, 16) an envelope signal (H) is formed which corresponds to the envelope of the electrical reception signals output by the ultrasonic transducer, that in a first time window (F₁) which lies in the range of the post-pulse vibrations of the container wall (12) at a point at which the post-pulse vibrations have substantially disappeared when the measuring point is covered and have not disappeared when the measuring point is not covered, the envelope signal (H) is sensed and compared to an assigned first threshold value, and that in a second time window (F₂), in which a reflected echo pulse is to be anticipated, the peak value of the envelope is established and compared to an assigned second threshold value.

3. The method as set forth in claim 2, **characterized in that** the envelope signal (H) is integrated in the first time window (F₁) and that the value of the integral is compared to the assigned threshold value.

4. The method as set forth in any one of claims 1 to 3, **characterized in that** the ultrasonic transducer (50) is excited alternately by two different transmission frequencies, of which the first transmission frequency equals the thickness resonant frequency of the container wall (12) when the measuring point is not covered and the second transmission frequency equals the thickness resonant frequency of the container wall (12) when the measuring point is covered.

5. The method as set forth in claim 4, **characterized in that** on excitation of the ultrasonic transducer (50) by the first transmission frequency only the received signals originating from the post-pulse vibration are evaluated and on excitation of the ultrasonic transducer (50) by the second transmission frequency only the received signals originating from echo pulses are evaluated.

6. The method as set forth in claim 4 or 5, **characterized in that** the thickness resonant frequencies of the container wall (12) are established with the measuring point not covered and covered and are stored in the evaluation circuit (14, 16).

7. The method as set forth in claim 6, **characterized in that** in operation in certain time intervals the transmission frequency corresponding to the maximum of the peak value or the transmission frequency corresponding to the maximum of the integral is established in a certain range about the corresponding stored thickness resonant frequency and that when a deviation is determined the stored frequency value is corrected.

8. The method as set forth in any one of the preceding claims, **characterized in that** the ultrasonic transducer (50) contains a piezoelectric element (51) which is made of a porous piezoelectric ceramic having a type 3-3 connectivity.

9. The method as set forth in claim 8, **characterized in that** the porous piezoelectric ceramic is lead-zirconate titanate (PZT).

10. The method as set forth in claim 8 or 9, **characterized in that** the piezoelectric element is arranged to rest on the bottom (53), serving as a diaphragm, of a pot-shaped transducer housing (52) made of plastics, that the interior of the transducer housing is filled at least partly with a potting compound (55), and that between the surface of the piezoelectric element (51) facing away from the diaphragm and the potting compound (55) a disk (56) of a closed-pore foamed silicone material is inserted which prevents the potting compound (55) from coming into contact with the piezoelectric element (51).

11. The method as set forth in claim 10, **characterized in that** the piezoelectric element (51) together with the foamed material disk (56) is installed outside of the transducer housing (52) in a mounting sleeve (60) which is configured such that, after insertion into the transducer housing (52) and before the potting compound (55) is filled in, it maintains the foamed material disk (56) in tight contact with the surface of the piezoelectric element (51) facing away from the diaphragm.

12. The method as set forth in claim 10 or 11, **characterized in that** between the surfaces of the diaphragm and the piezoelectric element (51) facing each other a thermally curable adhesive is introduced which after insertion of the mounting sleeve (60) into the transducer housing (52) is cured by being heated.

## Revendications

1. Procédé de surveillance d'un niveau de remplissage prédéterminé d'un liquide (11) dans un récipient (10), dans lequel
- un transducteur d'ultrasons (50) est monté sur un point de mesure à la hauteur du niveau de remplissage à surveiller, sur la face extérieure de la paroi de récipient (12) ;
- le transducteur d'ultrasons (50) est excité par une fréquence d'émission qui est égale à la fréquence de résonance d'épaisseur de la paroi de récipient (12) ;
- le transducteur d'ultrasons (50) transmet une impulsion d'émission d'ultrasons à la paroi de récipient (12) et convertit en signaux électriques des vibrations ultrasonores qui sont engendrées par des impulsions d'écho réfléchies sur la paroi de récipient (12) opposée ;
- les signaux de réception électriques sont transmis à un circuit d'évaluation (14, 16) qui constate en raison de l'apparition ou de l'absence de signaux d'écho si le point de mesure est recouvert par le liquide (11) ou non ; et dans lequel
- on évalue aussi dans le circuit d'évaluation (14, 16) les vibrations ultrasonores engendrées par la postoscillation de la paroi de récipient (12) après la fin de l'impulsion d'émission, pour constater si le point de mesure est recouvert par le liquide ou non.

2. Procédé selon la revendication 1, **caractérisé en ce que** dans le circuit d'évaluation (14, 16) est formé un signal d'enveloppante (H) qui correspond à l'enveloppante des signaux de réception électriques fournis par le transducteur d'ultrasons, **en ce que** dans une première fenêtre de temps (F₁) qui se trouve dans la région des postoscillations de la paroi de récipient (12), à un endroit sur lequel les postoscillations ont sensiblement disparu à point de mesure recouvert et n'ont pas disparu à point de mesure non recouvert, le signal d'enveloppante (H) est saisi et comparé avec une première valeur seuil associée, et **en ce que** dans une deuxième fenêtre de temps (F₂) dans laquelle on peut attendre une impulsion d'écho réfléchie, la valeur de crête de l'enveloppante est déterminée et comparée avec une deuxième valeur seuil associée.

3. Procédé selon la revendication 2, **caractérisé en ce que** le signal d'enveloppante (H) est intégré dans la première fenêtre de temps (F₁) et **en ce que** la valeur de l'intégrale est comparée avec la valeur seuil associée.

4. Procédé selon l'une des revendications 1 à 3, **caractérisé en ce que** le transducteur d'ultrasons (5) est excité en alternance par deux fréquences d'émission différentes dont la première fréquence d'émission est égale à la fréquence de résonance d'épaisseur de la paroi de récipient (12), lorsque le point de mesure n'est pas recouvert, et la deuxième fréquence d'émission est égale à la fréquence de résonance d'épaisseur de la paroi de récipient (12), lorsque le point de mesure est recouvert.

5. Procédé selon la revendication 4, **caractérisé en ce que**, lorsque le transducteur d'ultrasons (50) est excité par la première fréquence d'émission, on évalue seulement les signaux de réception provenant de la postoscillation et lorsque le transducteur d'ultrasons (50) est excité par la deuxième fréquence d'émission, on évalue seulement les signaux de réception provenant des impulsions d'échos.

6. Procédé selon la revendication 4 ou 5, **caractérisé en ce que** les fréquences de résonance d'épaisseur de la paroi de récipient (12) sont déterminées et mémorisées dans le circuit d'évaluation (14, 16) à point de mesure non recouvert et recouvert.

7. Procédé selon la revendication 7, **caractérisé en ce qu'**au fonctionnement, on détermine à des intervalles de temps déterminés, la fréquence d'émission correspondant au maximum de la valeur de crête et la fréquence d'émission correspondant au maximum de l'intégrale, dans une plage déterminée autour de la fréquence de résonance d'épaisseur correspondante mémorisée, et **en ce que** si l'on constate une divergence, on corrige la valeur de fréquence mémorisée.

8. Procédé selon l'une des revendications précédentes, **caractérisé en ce que** le transducteur d'ultrasons (50) contient un élément piézoélectrique (51) qui est réalisé à partir d'une céramique piézoélectrique poreuse avec la connectivité 3-3.

9. Procédé selon la revendication 8, **caractérisé en ce que** la céramique piézoélectrique poreuse est du titanate-zirconate de plomb (PZT).

10. Procédé selon la revendication 8 ou 9, **caractérisé en ce que** l'élément piézoélectrique est agencé de telle sorte qu'il repose sur le fond (53), servant de membrane, d'un boîtier de transducteur (52) en matière plastique, **en ce que** l'espace intérieur du boîtier de transducteur est rempli au moins partiellement d'une masse de scellement (55) et **en ce qu'**entre la surface de l'élément piézoélectrique, détournée de la membrane, et la masse de scellement (55) est introduit un disque (56) en une mousse de silicone à pores fermés qui empêche que la masse de scellement (55) ne vienne en contact avec l'élément piézoélectrique (51).

11. Procédé selon la revendication 10, **caractérisé en ce que** l'élément piézoélectrique (51) est monté conjointement avec le disque de mousse (56) en dehors du boîtier de transducteur (52) dans une douille de montage (52) qui est réalisée de telle sorte qu'après avoir été mise en place dans le boîtier de transducteur (52) et avant d'avoir rempli la masse de scellement (55), elle retient le disque de mousse (56) en appui étanche sur la surface détournée de la membrane, de l'élément piézoélectrique (51).

12. Procédé selon la revendication 10 ou 11, **caractérisé en ce qu'**entre les surfaces tournées l'une vers l'autre de la membrane et de l'élément piézoélectrique (51) est introduite une colle thermodurcissable qui durcit par réchauffement après avoir inséré la douille de montage (60) dans le boîtier de transducteur (52).
